Europäisches Patentamt

European Patent Office

Office européen des brevets

(19)

(11) EP 0 978 052 B1

(12) EUROPÄISCHE PATENTSCHRIFT

(45) Veröffentlichungstag und Bekanntmachung des Hinweises auf die Patenterteilung:
31.10.2001 Patentblatt 2001/44

(51) Int Cl.[7]: G06F 15/80

(21) Anmeldenummer: 97935479.2

(22) Anmeldetag: 24.07.1997

(86) Internationale Anmeldenummer:
PCT/DE97/01567

(87) Internationale Veröffentlichungsnummer:
WO 98/07100 (19.02.1998 Gazette 1998/07)

(54) **RECHNERGESTÜTZTES VERFAHREN ZUR AUSWAHL VON TRAININGSDATEN FÜR EIN NEURONALES NETZ**

COMPUTER-AIDED SELECTION OF TRAINING DATA FOR NEURAL NETWORKS

SELECTION ASSISTEE PAR ORDINATEUR DE DONNEES D'ENTRAINEMENT POUR RESEAU NEURONAL

(84) Benannte Vertragsstaaten:
DE FR GB

(30) Priorität: 09.08.1996 DE 19632245

(43) Veröffentlichungstag der Anmeldung:
09.02.2000 Patentblatt 2000/06

(73) Patentinhaber: SIEMENS AKTIENGESELLSCHAFT
80333 München (DE)

(72) Erfinder:
• DECO, Gustavo
D-80636 München (DE)
• OBRADOVIC, Dragan
D-81669 München (DE)
• SCHÜRMANN, Bernd
D-85778 Haimhausen (DE)

(56) Entgegenhaltungen:
EP-A- 0 528 399

• BYOUNG-TAK ZHANG ET AL: "Focused incremental learning for improved generalization with reduced training sets" ARTIFICIAL NEURAL NETWORKS. PROCEEDINGS OF THE 1991 INTERNATIONAL CONFERENCE. ICANN-91, ESPOO, FINLAND, 24-28 JUNE 1991, ISBN 0-444-89178-1, 1991, AMSTERDAM, NETHERLANDS, NORTH-HOLLAND, NETHERLANDS, Seiten 227-232, XP002049163

• WANN M ET AL: "THE INFLUENCE OF TRAINING SETS ON GENERALIZATION IN FEED-FORWARD NEURAL NETWORKS" INTERNATIONAL JOINT CONFERENCE ON NEURAL NETWORKS (IJCNN), SAN DIEGO, JUNE 17 - 21, 1990, Bd. VOL. 3, Nr. -, 17.Juni 1990, INSTITUTE OF ELECTRICAL AND ELECTRONICS ENGINEERS, Seiten 137-142, XP000146558

• HUNT S D ET AL: "TRAINING OF FEEDFORWARD ARTIFICIAL NEURAL NETWORKS USING SELECTIVE UPDATING" PROCEEDINGS OF THE MIDWEST SYMPOSIUM ON CIRCUITS AND SYSTEMS, DETROIT, AUG. 16 - 18, 1993, Bd. VOL. 2, Nr. SYMP. 36, 16.August 1993, INSTITUTE OF ELECTRICAL AND ELECTRONICS ENGINEERS, Seiten 1189-1192, XP000499790

• CHEUNG R K M ET AL: "RELATIVE EFFECTIVENESS OF TRAINING SET PATTERNS FOR BACK PROPAGATION" INTERNATIONAL JOINT CONFERENCE ON NEURAL NETWORKS (IJCNN), SAN DIEGO, JUNE 17 - 21, 1990, Bd. VOL. 1, Nr. -, 17.Juni 1990, INSTITUTE OF ELECTRICAL AND ELECTRONICS ENGINEERS, Seiten 673-678, XP000144281

• G.DECO, D.OBRADOVIC: "An Information-Theoretic Approach to Neural Computing, Seiten 187-217", Maerz 1996, SPRINGER, NEW YORK

**Beschreibung**

Rechnergestütztes Verfahren zur Auswahl von Trainingsdaten für ein neuronales Netz.

Bei einer datengetriebenen parametrischen Modellierung von verfahrenstechnischen Prozessen, beispielsweise unter Verwendung von neuronalen Netzen, werden Meßdaten für den verfahrenstechnischen Prozeß kontinuierlich gemessen. Bei dem sog. On-Line-Learning für neuronale Netze werden die ermittelten Meßdaten als Trainingsdaten für die Anpassung, d. h. die Adaption der Gewichte des neuronalen Netzes, verwendet. Somit werden alle gemessenen Daten des verfahrenstechnischen Prozesses als Trainingsdaten verwendet. Dies führt zu einem äußerst hohen Bedarf an Rechenkapazität zur Durchführung des On-Line-Lernens, da die Anpassung der Gewichte jeweils für jedes neue Trainingsdatum durchgeführt werden muß.

Ferner entstehen bei einer Adaption der Gewichte des neuronalen Netzes an erhöht redundante Trainingsdaten eine ständige Anpassung in den zu den Trainingsdaten zugehörigen Zustandsraumdomänen, was zu einer Überanpassung des neuronalen Netzes in diesen Domänen führt. Dies erfolgt jedoch zum Nachteil anderer Regionen, in denen keine bzw. erheblich weniger Trainingsdaten gemessen werden, die somit bei der Adaption und somit auch bei der Approximation der zu approximierenden Funktion "vergessen" werden.

Aus dem Dokument [1] sind Grundlagen über neuronale Netze bekannt.

Ferner ist aus dem Dokument [2] bekannt, für einen Trainingsdatenvektor einen Informationsgehalt des Trainingsdatenvektors bezüglich zuvor berücksichtigter Trainingsdatenvektoren zu ermitteln. Desweiteren wird in [2] beschrieben, daß im Rahmen eines Online-Lernens eine aktive Auswahl von Trainingsdaten getroffen werden kann.

Aus [3] ist ein Verfahren zur künstlichen Erzeugung von Trainingsdatenvektoren eines neuronalen Netzes zur Klassifikation von Zuständen bekannt, die zum Teil nur durch eine geringe Anzahl von Trainingsdatenvektoren repräsentiert werden. Bei diesem Verfahren werden Trainingsdatenvektoren generiert und für die Trainingsdatenvektoren wird die Verläßlichkeit jeweils eines Trainingsdatenvektors hinsichtlich einer korrekten Klassifikation ermittelt. Ist die Verläßlichkeit ausreichend hoch, wird der Trainingsdatenvektor zum Trainieren eingesetzt. Mit diesem Verfahren ist eine Approximation eines nichtlinearen Systemverhaltens insbesondere während der Laufzeit des Systems durch ein neuronales Netz nicht möglich.

In [4] und [8] ist ein Verfahren zum Trainieren eines neuronalen Netzes beschrieben, bei dem für einen potentiellen Trainingsdatenvektor mit gegebenem zugehörigen Zielwert untersucht wird, ob eine Abweichung des Ausgabewerts des neuronalen Netzes für den potentiellen Trainingsdatenvektor von dem Zielwert deutlich abweicht. Ist die Abweichung ausreichend gering, so wird der potentielle Trainingsdatenvektor für das Training eingesetzt. In diesem Verfahren sind vorgegebene Zielwerte erforderlich, die häufig in einem dynamischen System nicht bekannt sind. Somit ist das Verfahren insbesondere beim sogenannten Online-Lernen nicht einsetzbar.

In [6] ist ein weiteres Verfahren zum Trainieren eines neuronalen Netzes beschrieben. Im Rahmen eines iterativen Verfahrens wird in jedem Iterationsschritt ein Training des neuronalen Netzes durchgeführt, wobei für das Training des aktuellen Iterationsschritts eine Auswahl von Trainingsdatenpaaren aus einer für das Training des neuronalen Netzes zur Verfügung stehenden Menge von Trainingsdaten getroffen wird.

In [9] ist ein Verfahren zum Trainieren eines neuronalen Netzes beschrieben, bei dem aus einer Menge von Trainingsdaten diejenigen Trainingsdaten für das Training des neuronalen Netzes ausgewählt werden, die im Training zu einer signifikanten Änderung von Neuronengewichten des neuronalen Netzes führen.

In [7] ist ein Verfahren zur Clusterung von Trainingsdaten eines neuronalen Netzes beschrieben.

In [10] ist ein Verfahren zur Ermittlung von Trainingsdaten eines neuronalen Netzes beschrieben, bei dem eine Erweiterung eines Trainingsdatensatzes durchgeführt wird.

Ein Apparat zur Realisierung eines trainierbaren neuronalen Netzes ist in [5] beschrieben.

Der Erfindung liegt das Problem zugrunde, Trainingsdaten für ein neuronales Netz auszuwählen.

Das Problem wird durch das Verfahren gemäß Patentanspruch 1 sowie durch das Verfahren gemäß Patentanspruch 2 gelöst.

Bei dem Verfahren gemäß Patentanspruch 1 wird für mindestens einen eingelesenen neuen Trainingsdatenvektor ein Informationsgehalt des Trainingsdatenvektors bestimmt. Der Informationsgehalt für den Trainingsdatenvektor bezieht sich auf zuvor in einer Trainingsphase berücksichtigte Trainingsdatenvektoren. Der untersuchte Trainingsdatenvektor wird nur dann catsächlich zum Training des neuronalen Netzes verwendet, wenn der Informationsgehalt des Trainingsdatenvektors ausreichend groß ist, d. h. größer ist als eine vorgebbare Schwelle.

Bei dem Verfahren gemäß Patentanspruch 2 werden mehrere Trainingsdatenvektoren eingelesen, welche in mehrere Cluster gruppiert werden. Für mindestens einen Teil der Cluster wird ein Informationsgehalt des Clusters bestimmt. Der Informationsgehalt des Clusters bezieht sich wiederum auf zuvor in einer Trainingsphase berücksichtigte Trainingsdatenvektoren. Es werden bei diesem Verfahren lediglich dann Trainingsdatenvektoren eines jeweiligen Clusters zum Training des neuronalen Netzes verwendet, wenn der Informationsgehalt des jeweiligen Clusters größer ist als eine vorgebbare zweite Schwelle.

Durch die Verfahren wird eine erhebliche Reduktion des Bedarfs an Rechenkapazität erreicht, da bei dem Training eines neuronalen Netzes nicht mehr alle Trainingsdaten ohne weiteres berücksichtigt werden, sondern es wird eine Auswahl von Trainingsdaten, die einen Neuigkeitsgehalt bezüglich schon trainierter Trainingsdaten aufweisen, getroffen.

Ferner ist ein Vorteil der Verfahren darin zu sehen, daß die Abbildungsfunktion, die durch das neuronale Netz realisiert wird, trotz erheblich reduziertem Rechenzeitbedarf zum Training und erheblich reduzierter Menge berücksichtigter Trainingsdaten eine erheblich verbesserte Adaption an den eigentlich zu modellierenden Prozeß, d. h. die eigentlich zu approximierende Funktion realisiert.

Dies ist darauf zurückzuführen, daß keine Überanpassung der zu approximierenden Funktion in bestimmten Bereichen durchgeführt wird, wenn in diesen Bereichen schon eine ausreichende Anzahl von Trainingsdaten zur Adaption des neuronalen Netzes berücksichtigt wurde.

Durch die Verfahren wird ferner eine Reduktion von zu bearbeitender Redundanzinformation erreicht.

Vorteilhafte Weiterbildungen der Erfindung ergeben sich aus den abhängigen Ansprüchen.

In den Figuren sind Ausführungsbeispiele der Erfindung dargestellt, die im weiteren näher erläutert werden.

Es zeigen

| | |
|---|---|
| Fig. 1a bis 1c | Skizzen einer zu approximierenden Funktion, der durch das neuronale Netz gebildeten Abbildungsfunktion sowie einer Mehrzahl von Trainingsdatenvektoren, mit denen das Prinzip der Verfahren veranschaulicht wird; |
| Fig. 2 | ein Ablaufdiagramm, in dem die einzelnen Verfahrensschritte des Verfahrens gemäß Patentanspruch 1 dargestellt sind; |
| Fig. 3 | ein Ablaufdiagramm, in dem die einzelnen Verfahrensschritte des Verfahrens gemäß Patentanspruch 2 dargestellt sind; |
| Fig. 4 | eine Skizze einer Rechneranordnung mit einem Meßgerät, mit der das Verfahren durchgeführt wird; |
| Fig. 5 | eine Skizze in der ein Ergebnis eines Zahlenbeispiels für das Verfahren gemäß Patentanspruch 1 dargestellt ist. |

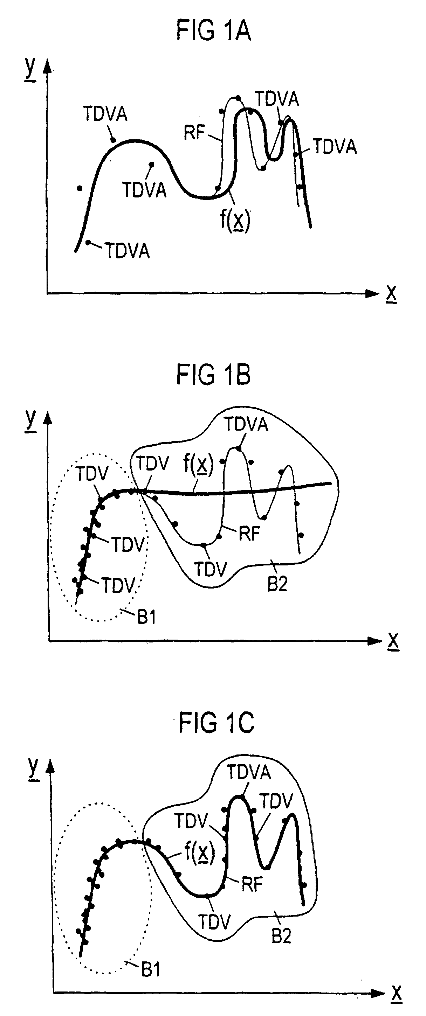

In Fig. 1a ist eine Abbildungsfunktion $f(\underline{x})$, welche durch ein neuronales Netz NN realisiert wird, dargestellt. Ferner ist in der Fig. 1a eine durch das neuronale Netz NN zu approximierende Funktion RF dargestellt. Für an das neuronale Netz NN angelegte Eingabevektoren $\underline{x}$ wird durch die Abbildungsfunktion $f(\underline{x})$ ein Ausgabevektor $\underline{y}$ gebildet. Die Abbildungsfunktion $f(\underline{x})$ wird in einer Trainingsphase durch eine vorgebbare Anzahl von Trainingsdatenvektoren TDVA gebildet, die in einem Trainingsverfahren, beispielsweise einem Gradienten-Abstiegsverfahren, z. B. dem Back-Propagation-Verfahren, adaptiert werden.

In Fig. 1b ist die übliche problematische Situation bei der Verwendung weiterer neu hinzukommender Trainingsdatenvektoren TDV zum Trainieren des neuronalen Netzes NN dargestellt. Üblicherweise wird für jeden neu hinzugekommenen Trainingsdatenvektor TDV wiederum das Trainingsverfahren durchgeführt, d. h. jeder Trainingsdatenvektor TDV wird zur Adaption der Abbildungsfunktion $f(\underline{x})$, d. h. bei der Adaption von Gewichten $w_i$ eines Gewichtsvektors $\underline{w}$ des neuronalen Netzes NN berücksichtigt.

Ein ungünstiger Fall ist in diesem einfachen Beispiel in Figur 1b dargestellt, bei dem in einem ersten Bereich B1, in dem die zu approximierende Funktion RF einen sehr regelmäßigen, d. h. in etwa linearen Verlauf aufweist, eine sehr hohe Anzahl von Trainingsdatenvektoren TDV gemessen werden. Die Trainingsdatenvektoren TDV werden bei bekannten Verfahren üblicherweise alle bei dem Training des neuronalen Netzes NN berücksichtigt. In einem zweiten Bereich B2, welcher eine erhöhte Unregelmäßigkeit aufweist, wird in diesem Beispielsfall lediglich eine geringe Anzahl von Trainingsdatenvektoren TDV gemessem und können bei dem dem Training des neuronalen Netzes NN zur Adaption der Gewichte $w_i$ des neuronalen Netzes NN berücksichtigt werden.

Dies führt nunmehr bei den bekannten Verfahren dazu, daß in dem ersten Bereich B1 unnötigerweise eine erhöhte Anzahl von Trainingsdatenvektoren TDV bei dem Training des neuronalen Netzes NN berücksichtigt werden. Dies führt zu einem erhöhten, wie im weiteren näher erläutert wird, eigentlich unnötigen Rechenbedarf zur Durchführung des Verfahrens durch einen Rechner.

In Fig. 1b ist dargestellt, daß die Abbildungsfunktion f(x) bei Verwendung bekannter Lernverfahren in dem zweiten Bereich B2 einen geglätteten Verlauf aufweist, wodurch die zu approximierende Funktion RF nur noch äußerst schlecht nachgebildet wird. Dies ist darauf zurückzuführen, daß bei dem Training eine erhöhte Anzahl von Trainingsvektoren TDV in dem ersten Bereich B1 berücksichtigt werden, jedoch in dem zweiten Bereich B2 nur eine vergleichsmäßig geringe Anzahl von Trainingsdatenvektoren TDV.

In Fig. 1c ist der Vorteil der erfindungsgemäßen Verfahren dargestellt. Durch die Verfahren wird, wie im weiteren näher erläutert wird, für jeden Trainingsdatenvektor TDV ein Informationsgehalt N(P) für den jeweiligen Trainingsdatenvektor TDV ermittelt, und abhängig von dem Trainingsdatenvektor TDV wird der Trainingsdatenvektor TDV entweder bei dem Training des neuronalen Netzes NN berücksichtigt oder nicht.

Dies führt in diesem einfachen, prinzipiellen Beispiel dazu, daß Trainingsdatenvektoren TDV in dem ersten Bereich B1 nicht berücksichtigt werden, jedoch Trainingsdatenvektoren TDV in dem zweiten Bereich B2 berücksichtigt werden. Durch dieses Verfahren wird zum einen erreicht, daß nur noch eine vergleichsmäßig geringe Anzahl von Trainingsdatenvektoren TDV bei dem Training berücksichtigt werden müssen und zum anderen, daß die resultierende Abbildungsfunktion f(x) die zu approximierende Funktion RF in dem gesamten Bereich erheblich besser approximieren kann als das mit den bisher bekannten Verfahren möglich ist.

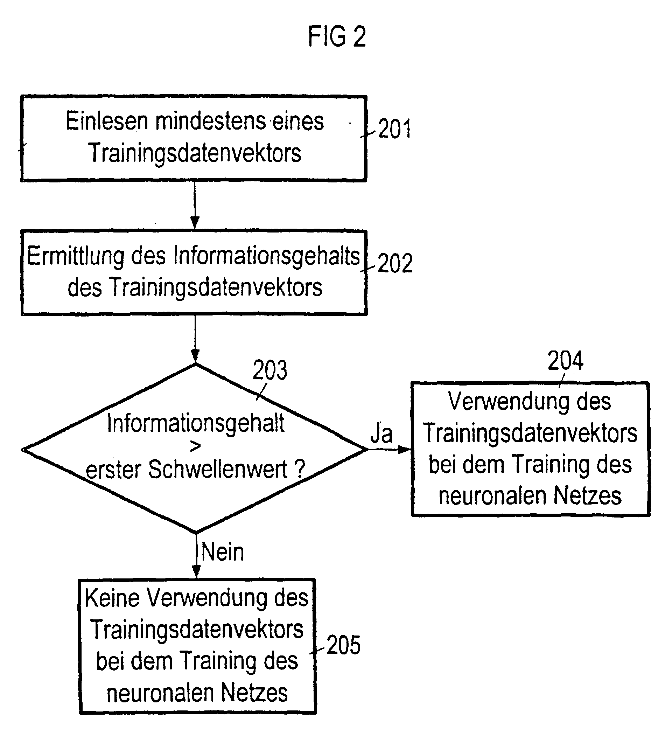

In Fig. 2 ist in Form eines Ablaufdiagramms das Verfahren gemäß Patentanspruch 1 in seinen einzelnen Verfahrensschritten dargestellt.

Es wird in einem ersten Schritt 2C1 mindestens ein Trainingsdacenvektor TDV von einem das Verfahren durchführenden Rechner R eingelesen. Der Trainingsdatenvektor TDV kann beispielsweise ein von einem Meßgerät MG oder einem Sensor SE ermittelter Meßwert eines beliebigen verfahrenstechnischen Prozesses sein. Er kann aber auch beispielsweise ein aufgenommenes Sprachsignal oder Teile eines Sprachsignals repräsentieren. Die Art des Trainingsdatenvektors TDV und die Art der Ermittlung des Trainingsdatenvektors TDV ist allgemein völlig anwendungsspezifisch.

In einem zweiten Schritt 202 wird für den mindestens einen Trainingsdatenvektor TDV der Informationsgehalt N(P) des Trainingsdatenvektors TDV bestimmt. Dies erfolgt beispielsweise nach dem in dem Dokument [2] dargestellten Verfahren. Dabei ergibt sich beispielsweise der Informationsgehalt N(P) des Trainingsdatenvektors TDV nach folgender Vorschrift:

$$N(P) = \int p\left(\underline{w}\Big|\underline{D}^{(P+1)}\right) \ln\left(\frac{p\left(\underline{w}\Big|\underline{D}^{(P+1)}\right)}{p\left(\underline{w}\Big|\underline{D}^{(P)}\right)}\right) d\underline{w} \qquad (1),$$

wobei mit

- $\underline{w}$ ein Gewichtsvektor des Neuronalen Netzes NN bezeichnet wird, der als Komponenten Gewichte $\underline{w}_i$ des Neuronalen Netzes NN aufweist,
- $\underline{D}^{(P)}$ ein Trainingsdatensatz bezeichnet wird, der die zuvor schon berücksichtigten Trainingsdatenvektoren TDV enthält,
- $\underline{D}^{(P+1)}$ ein erweiterter Trainingsdatensatz bezeichnet wird, der die zuvor berücksichtigten Trainingsdatenvektoren TDV und den Trainingsdatenvektor TDV enthält,
- $p(.|.)$ jeweils eine bedingte Wahrscheinlichkeit bezeichnet wird.

Diese Vorschrift zur Bildung des Informationsgehalts N(P) kann zur Vereinfachung der Durchführung der Ermittlung näherungsweise zu folgender Vorschrift zur Bildung des Informationsgehalts N(P) vereinfacht werden:

$$N(P) = \frac{1}{2} \ln\left(\det\left(1 + F'' \left(F'^{(P)}\right)^{-1}\right)\right) \qquad (2)$$

mit

$$F'' = \vec{\nabla} \vec{\nabla} \left(\sum_{i=1}^{M} \left(y_i - f_i\left(\underline{x}, \underline{w}_{P_i}\right)\right)^n\right) \qquad (3)$$

und

$$F^{,,}(P) = \sum_{q=1}^{S} \vec{\nabla} \vec{\nabla} \left( \sum_{i=1}^{M} \left( y_i(q) - f_i\left( \underline{x}(q), \underline{w}_{P_i} \right) \right)^n \right) \qquad (4),$$

wobei mit

- $\underline{x}$ jeweils ein Eingabevektor des Neuronalen Netzes NN bezeichnet wird,
- $\underline{w}_{P_i}$ jeweils ein Gewichtsvektor des Neuronalen Netzes NN bezeichnet wird,
- $f_i(.)$ eine durch das Neuronale Netz NN realisierte Abbildungsfunktion für eine Komponente $y_i$ eines Ausgabevektors $\underline{y}$ des Neuronalen Netzes NN bezeichnet wird,
- n eine beliebige natürliche Zahl bezeichnet wird,
- M eine Dimension des jeweiligen Ausgabevektors $\underline{y}$ des Neuronalen Netzes NN bezeichnet wird,
- i ein erster Index zur eindeutigen Identifizierung einer Komponente $y_i$ des Ausgabevektors $\underline{y}$ des Neuronalen Netzes NN bezeichnet wird,
- $\vec{\nabla} \vec{\nabla}(.)$ eine Hesse-Matrix bezeichnet wird,
- q ein zweiter Index zur eindeutigen Identifizierung des jeweiligen berücksichtigten Trainingsdatenvektors TDV bezeichnet wird, und
- S eine Anzahl zuvor berücksichtigter Traingsdatenvektoren TDV bezeichnet wird.

Die oben genannten Vorschriften zur Ermittlung des Informationsgehalts N(P) basieren auf der Annahme einer Kullback-Leibler-Entropie. Wird zur Bestimmung des Informationsgehalts eine andere Definition einer Entropie verwendet, werden selbstverständlich entsprechend angepaßte Vorschriften zur Ermittlung des Informationsgehaltes N(P) in den Verfahren verwendet.

Wie in dem Dokument [2] ferner dargestellt ist, ist eine solche Vorschrift für den Sonderfall, daß die zu approximierende Funktion RF durch ein Polynom gegeben ist, in zu den oben genannten Vorschriften geänderter Form bekannt.

Bei der Ermittlung des Informationsgehalts N(P) für den Trainingsdatenvektor TDV werden die zuvor berücksichtigten Trainingsdatenvektoren TDVA berücksichtigt. Dies ist direkt aus den oben beispielhaft aufgeführten Vorschriften ersichtlich.

In einem dritten Schritt 203 wird anschließend überprüft, ob der Informationsgehalt N(P) des Trainingsdatenvektors TDV größer ist als ein frei vorgebbarer erster Schwellenwert S1.

Ist der Informationsgehalt N(P) größer als der erste Schwellenwert S1, so wird der Trainingsdatenvektor TDV bei dem Training des neuronalen Netzes NN verwendet 204, d. h. bei der Adaption der Gewichte $w_i$ berücksichtigt.

Ist jedoch der Informationsgehalt N(P) des Trainingsdatenvektors TDV nicht größer als der erste Schwellenwert S1, so wird der Trainingsdatenvektor TDV nicht im Rahmen des Trainings des neuronalen Netzes NN berücksichtigt 205.

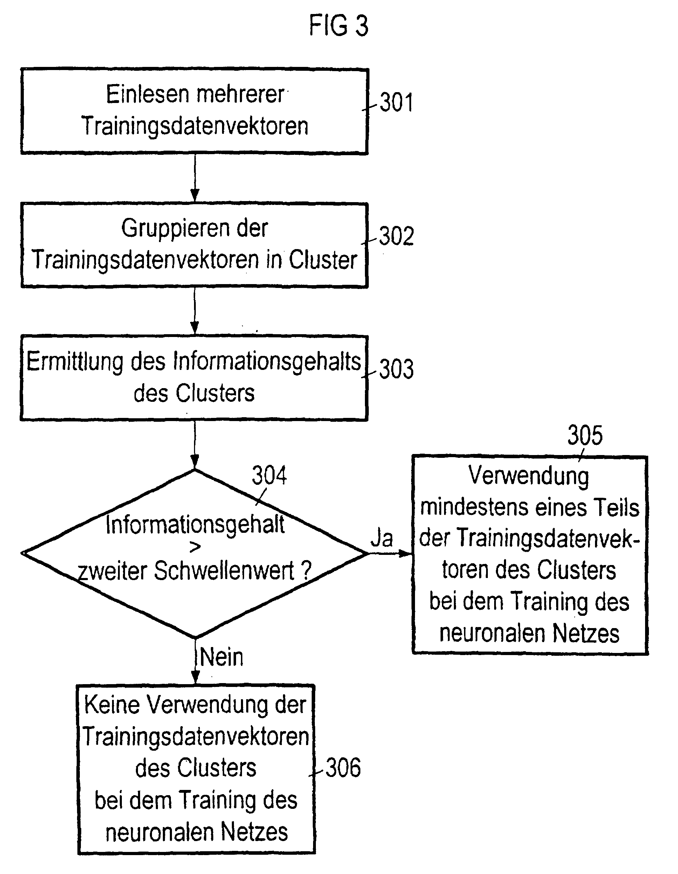

In Fig. 3 ist das Verfahren gemäß Patentanspruch 2 in seinen Verfahrensschritten dargestellt.

Es werden in einem ersten Schritt mehrere Trainingsdatenvektoren TDV eingelesen 301.

Die Trainingsdatenvektoren TDV werden in einem weiteren Schritt 302 in mehrere sog. Cluster gruppiert. Unter einem Cluster ist eine Gruppe von Trainingsdatenvektoren TDV zu verstehen. Zur Gruppenbildung, also zum Clustern von Vektoren sind verschiedenste Verfahren bekannt, beispielsweise das sog. K-Means-Clustering oder auch das sog. Nächste-Nachbar-Clustering.

In einem dritten Schritt 303 wird für mindestens einen Teil der Cluster ein Informationsgehalt N(P) des jeweiligen Clusters bestimmt. Diese Bestimmung kann auf beliebige Weise erfolgen, beispielsweise nach den oben genannten Vorschriften zur Bildung des Informationsgehaltes N(P).

Dabei ist es in einer Weiterbildung des Verfahrens vorteilhaft, für jedes Cluster beispielsweise mindestens einen Repräsentanzvektor aus den Trainingsdatenvektoren TDV des jeweiligen Clusters beliebig auszuwählen, und für den Repräsentanzvektor den Informationsgehalt N(P) zu ermitteln, und den Informationsgehalt N(P) des Repräsentanzvektors des jeweiligen gesamten Clusters zu verwenden.

Ferner ist es in einer Weiterbildung des Verfahrens vorteilhaft, für mindestens einen Teil der Cluster einen Cluster-Zentrumsvektor zu ermitteln. Der Cluster-Zentrumsvektor wird beispielsweise durch den Mittelpunkt des jeweiligen Clusters gebildet. Der Informationsgehalt N(P) des Clusters wird in dieser Weiterbildung für den Cluster-Zentrumsvektor ermittelt und als Informationsgehalt N(P) des jeweiligen Clusters verwendet.

Wiederum wird der Informationsgehalt N(P) unter Berücksichtigung der zuvor in der Trainingsphase berücksichtigten Trainingsdatenvektoren TDVA bestimmt.

In einem weiteren Schritt 304 wird überprüft, ob der Informationsgehalt N(P) des jeweiligen Clusters größer ist als ein frei vcrgebbarer zweiter Schwellenwert S2.

Ist dies der Fall, so wird mindestens ein Trainingsdatenvektor TDV des jeweiligen Clusters im Rahmen des Trainings des neuronalen Netzes NN verwendet 305.

Ist dies jedoch nicht der Fall, so wird kein Trainingsdatenvektor TDV des jeweiligen Clusters beim Training des neuronalen Netzes NN berücksichtigt 306.

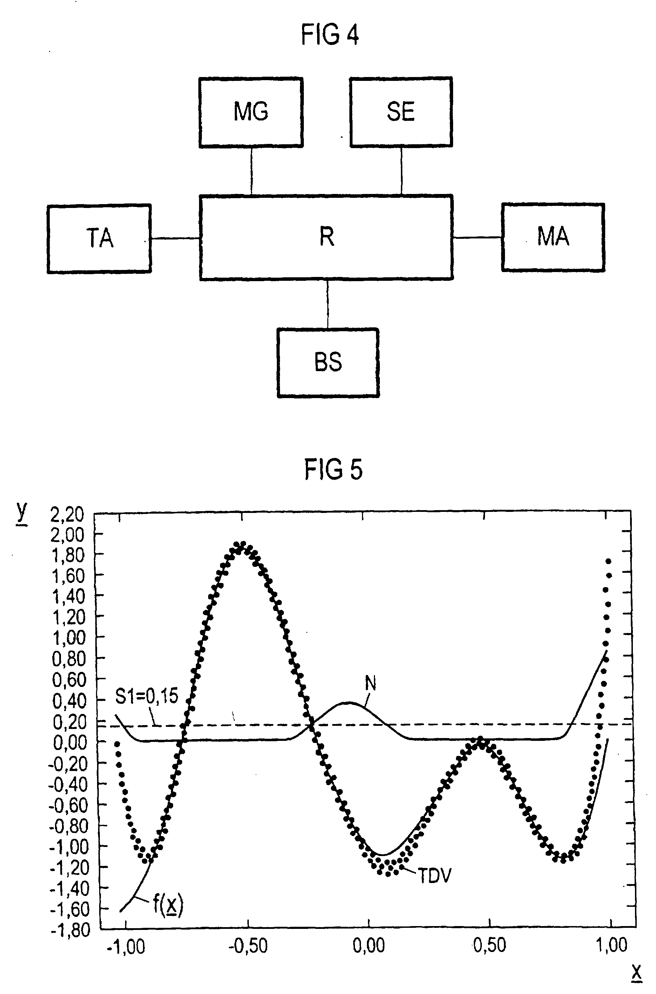

In Fig. 4 ist eine Rechneranordnung dargestellt, mit der das Verfahren beispielsweise durchgeführt wird.

Trainingsdatenvektoren TDV werden beispielsweise über den Sensor SE oder das Meßgerät MG aus einem verfahrenstechnischen Prozeß beliebiger Art gemessen. Der Trainingsdatenvektor TDV wird dem Rechner R zugeführt, mit dem die Verfahren durchgeführt werden. Ferner ist in der Rechneranordnung beispielsweise eine Tastatur TA, eine Maus MA oder ein Bildschirm BS vorgesehen.

In Fig. 5 ist ein einfaches Zahlenbeispiel für das Verfahren dargestellt. Dieses Zahlenbeispiel soll lediglich einen einfachen Einblick in das Verfahren ermöglichen, es schränkt jedoch die Allgemeingültigkeit des Verfahrens in keinster Weise ein, da weder die Art der zu approximierenden Funktion RF, noch die Anzahl der Trainingsdatenvektoren TDV, noch die Eigenschaften der Trainingsdatenvektoren TDV irgendeiner Einschränkung unterliegen.

In diesem einfachen Zahlenbeispiel ist die zu approximierende Funktion RF nach folgender Vorschrift gegeben:

$$RF = -1 - 3x + 18x^2 + 4x^3 - 48x^4 + 32x^6 + \nu.$$

Mit einem Symbol $\nu$ wird in diesem Beispielsfall ein Gaußsches Rauschen mit einer Varianz des Wertes 0,05 repräsentiert. Die Architektur des neuronalen Netzes NN, welches im Rahmen dieses Zahlenbeispieles verwendet wurde, weist ein Eingangsneuron, zehn versteckte Neuronen und ein Ausgangsneuron auf. Die Trainingsdatenvektoren TDV wurden in einem Bereich

$-0,9 < x < 0,3$ und in einem Bereich $0,3 < x < 0,9$ gemessen.

Der Informationsgehalt N(P) ist als eine Funktion N in Fig. 5 als gesamter Verlauf Informationsgehalts N(P) für alle Eingabevektoren $\underline{x}$ und alle Ausgabevektoren $\underline{y}$ dargestellt. Der Bereich der Eingabevektoren $\underline{x}$, welche im Rahmen dieses Zahlenbeispieles berücksichtigt wurden, liegt im Bereich

$-1 < x < 1$.

Ein beipielhafter Wert für den ersten Schwellenwert S1 ist beispielsweise der Wert 0,15, wie dies auch in Fig. 5 dargestellt ist.

Dies bedeutet, daß in diesem Zahlenbeispiel all diejenigen Trainingsdatenvektoren TDV zum Training des neuronalen Netzes NN berücksichtigt wurden, welche einen Informationsgehalt N(P) aufweisen, der größer ist als 0,15.

Allgemein ist jedoch sowohl der erste Schwellenwert S1 als auch der zweite Schwellenwert S2 völlig frei wählbar und abhängig von den anwendungsspezifischen Anforderungen.

Im Rahmen dieses Dokumentes wurden folgende Veröffentlichungen zitiert:

[1] G. Deco und D. Obradovic, An Information-Theoretic Approach to Neural Computing, Springer Verlag, B, 1. Auflage, ISBN 0-387-94666-7, S. 23 - 37, 1995

[2] G. Deco und D. Obradovic, An Information-Theoretic Approach to Neural Computing, Springer Verlag, B, 1. Auflage, ISBN 0-387-94666-7, S. 187 - 217, 1995

[3] US 5 359 699

[4] US 5 355 434

[5] US 5 283 838

[6] Byoung-Tak Zhang, et al., Focused incremental learning for improved generalization with reduced training sets, Artificial neural networks, Proceedings of the 1991 international conference ICANN-91, ESP00, Finland, 24.-28.Juni 1991, ISBN 0-444-89178-1, 1991, Amsterdam, Netherlands

[7] Wann, M., et al., The influence of training sets on generalization in feed-forward neural networks, International Joint conference on neural networks (IJCNN), San Diego, 17.-21.Juni 1990, Bd. Vol. 3, 17. Juni 1990, Institute of electrical and electronics engineers

# EP 0 978 052 B1

[8] EP 0 528 399 A

[9] Hunt, S. D., et al., Training of feedforward artifical neural networks using selective updating, Proceedings of the midwest symposium on circuits and systems, Detroit, 16.-18.August 1993, Bd. Vol. 2, Nr. Symp. 36., 16.August 1993, Institute of electrical and electronics engineers

[10] Cheung, R. K. M., et al., Relative effectiveness of training set patterns for back propagation, International Joint conference on neural networks (IJCNN), San Diego, 17.-21.Juni 1990, Bd. Vol. 1, 17. Juni 1990, Institute of electrical and electronics engineers

**Patentansprüche**

1. Rechnergestütztes Verfahren zur Auswahl von Trainingsdaten für ein Neuronales Netz (NN),

   bei dem mindestens ein Trainingsdatenvektor (TDV) eingelesen wird (201),
   bei dem für den Trainingsdatenvektor (TDV) ein Informationsgehalt N(P) des Trainingsdatenvektors (TDV) bestimmt wird (202),
   und bei dem die Bestimmung des Informationsgehalts N(P) für den Trainingsdatenvektor (TDV) unter Verwendung von zuvor in einer Trainingsphase berücksichtigter Trainingsdatenvektoren (TDV) erfolgt,

   **dadurch gekennzeichnet, daß**

   - für den Fall, daß der Informationsgehalt N(P) des Trainingsdatenvektors (TDV) größer ist als ein vorgebbarer erster Schwellenwert (S1) (203), der Trainingsdatenvektor (TDV) zum Training des Neuronalen Netzes (NN) verwendet wird (204), und
   - für den Fall, daß der Informationsgehalt N(P) des Trainingsdatenvektors (TDV) nicht größer ist als der erste Schwellenwert (S1) (203), der Trainingsdatenvektor (TDV) nicht zum Training des Neuronalen Netzes (NN) verwendet wird (205).

2. Rechnergestütztes Verfahren zur Auswahl von Trainingsdaten für ein Neuronales Netz (NN),

   - bei dem mehrere Trainingsdatenvektoren (TDV) eingelesen werden (301),
   - bei dem die Trainingsdatenvektoren (TDV) in mehrere Cluster gruppiert werden (302),
   - bei dem für mindestens einen Teil der Cluster ein Informationsgehalt N(P) des Clusters bestimmt wird (303),
   - bei dem die Bestimmung des Informationsgehalts N(P) des jeweiligen Clusters unter Verwendung von zuvor in einer Trainingsphase berücksichtigter Trainingsdatenvektoren (TDV) erfolgt,
   - bei dem für den Fall, daß der Informationsgehalt N(P) des jeweiligen Clusters größer ist als ein vorgebbarer zweiter Schwellenwert (S2) (304), mindestens ein Trainingsdatenvektor (TDV) des jeweiligen Clusters zum Training des Neuronalen Netzes (NN) verwendet wird (305), und
   - bei dem für den Fall, daß der Informationsgehalt N(P) des jeweiligen Clusters nicht größer ist als der zweite Schwellenwert (S2) (304), kein Trainingsdatenvektor (TDV) des jeweiligen Clusters zum Training des Neuronalen Netzes (NN) verwendet wird (306).

3. Verfahren nach Anspruch 2,

   - bei dem für das jeweilige Cluster ein Clusterzentrumsvektor ermittelt wird, und
   - bei dem der Informationsgehalt N(P) für den Clusterzentrumsvektor ermittelt wird.

4. Verfahren nach einem der Ansprüche 1 bis 3,
   bei dem der Informationsgehalt N(P) des Trainingsdatenvektors (TDV) bzw. der Informationsgehalt N(P) der Cluster nach folgender Vorschrift ermittelt wird:

7

$$N(P) = \int p\left(\underline{w}\middle|\underline{D}^{(P+1)}\right) \ln\left(\frac{p\left(\underline{w}\middle|\underline{D}^{(P+1)}\right)}{p\left(\underline{w}\middle|\underline{D}^{(P)}\right)}\right) d\underline{w} \quad,$$

wobei mit

- $\underline{w}$ ein Gewichtsvektor des Neuronalen Netzes (NN) bezeichnet wird, der als Komponenten Gewichte $\underline{w}_i$ des Neuronalen Netzes (NN) aufweist,
- $\underline{D}^{(P)}$ ein Trainingsdatensatz bezeichnet wird, der die zuvor berücksichtigten Trainingsdatenvektoren (TDV) enthält,
- $\underline{D}^{(P+1)}$ ein erweiterter Trainingsdatensatz bezeichnet wird, der die zuvor berücksichtigten Trainingsdatenvektoren (TDV) und den Trainingsdatenvektor (TDV) enthält,
- $p(.|.)$ jeweils eine bedingte Wahscheinlichkeit bezeichnet wird.

**5.** Verfahren nach einem der Ansprüche 1 bis 3,
bei dem der Informationsgehalt N(P) des Trainingsdatenvektors (TDV) bzw. der Informationsgehalt N(P) der Cluster nach folgender Vorschrift ermittelt wird:

$$N(P) = \frac{1}{2} \ln\left( \det\left( 1 + F'' \left( F'^{,(P)} \right)^{-1} \right) \right)$$

mit

$$F'' = \vec{\nabla} \vec{\nabla} \left( \sum_{i=1}^{M} \left( y_i - f_i\left( \underline{x}, \underline{w}_{P_i} \right) \right)^n \right)$$

$$F'^{,(P)} = \sum_{q=1}^{S} \vec{\nabla} \vec{\nabla} \left( \sum_{i=1}^{M} \left( y_i(q) - f_i\left( \underline{x}(q), \underline{w}_{P_i} \right) \right)^n \right) \quad,$$

wobei mit

- $\underline{x}$ jeweils ein Eingabevektor des Neuronalen Netzes (NN) bezeichnet wird,
- $\underline{w}_{P_i}$ jeweils ein Gewichtsvektor des Neuronalen Netzes NN bezeichnet wird,
- $f_i(.)$ eine durch das Neuronale Netz (NN) realisierte Abbildungsfunktion für eine eine Komponente $y_i$ eines Ausgabevektors $\underline{y}$ des Neuronalen Netzes (NN) bezeichnet wird,
- n eine beliebige natürliche Zahl bezeichnet wird,
- M eine Dimension des jeweiligen Ausgabevektors $\underline{y}$ des Neuronalen Netzes (NN) bezeichnet wird,
- i ein erster Index zur eindeutigen Identifizierung einer Komponente $y_i$ des Ausgabevektors $\underline{y}$ des Neuronalen Netzes (NN) bezeichnet wird,
- $\vec{\nabla} \vec{\nabla}(.)$ eine Hesse-Matrix bezeichnet wird,
- q ein zweiter Index zur eindeutigen Identifizierung des jeweiligen berücksichtigten Trainingsdatenvektors (TDV) bezeichnet wird, und
- S eine Anzahl zuvor berücksichtigter Traingsdatenvektoren (TDV) bezeichnet wird.

**Claims**

1. Computer-assisted method for selecting training data for a neural network (NN),

    in which at least one training data vector (TDV) is read in (201),
    in which an information content N(P) of the training data vector (TDV) is determined (202) for the training data vector (TDV),
    and in which the information content N(P) is determined for the training data vector (TDV) using training data vectors (TDV) taken into account previously in a training phase,

    **characterized in that**

    - if the information content N(P) of the training data vector (TDV) is larger than a prescribable first threshold value (S1) (203), the training data vector (TDV) is used (204) for training the neural network (NN), and
    - if the information content N(P) of the training data vector (TDV) is not larger than the first threshold value (S1) (203), the training data vector (TDV) is not used (205) for training the neural network (NN).

2. Computer-assisted method for selecting training data for a neural network (NN),

    - in which a plurality of training data vectors (TDV) are read in (301),
    - in which the training data vectors (TDV) are grouped (302) into a plurality of clusters,
    - in which an information content N(P) of the cluster is determined (303) for at least some of the clusters,
    - in which the information content N(P) of the respective cluster is determined using training data vectors (TDV) taken into account previously in a training phase,
    - in which, if the information content N(P) of the respective cluster is larger than a prescribable second threshold value (S2) (304), at least one training data vector (TDV) of the respective cluster is used (305) for training the neural network (NN), and
    - in which, if the information content N(P) of the respective cluster is not larger than the second threshold value (S2) (304), no training data vector (TDV) of the respective cluster is used (306) for training the neural network (NN).

3. Method according to Claim 2,

    - in which a cluster centre vector is ascertained for the respective cluster, and
    - in which the information content N(P) is ascertained for the cluster centre vector.

4. Method according to one of Claims 1 to 3,
    in which the information content N(P) of the training data vector (TDV) or the information content N(P) of the clusters is ascertained on the basis of the following specification:

$$N(P) = \int p\left(\underline{w}\middle|\underline{D}^{(P+1)}\right) \ln\left(\frac{p\left(\underline{w}\middle|\underline{D}^{(P+1)}\right)}{p\left(\underline{w}\middle|\underline{D}^{(P)}\right)}\right) d\underline{w} \quad,$$

    where

    - $\underline{w}$ denotes a weight vector of the neural network (NN), whose components are weights $\underline{w}_i$ of the neural network (NN),
    - $\underline{D}^{(P)}$ denotes a training data record which contains the training data vectors (TDV) taken into account previously,
    - $\underline{D}^{(P+1)}$ denotes an extended training data record which contains the training data vectors (TDV) taken into account previously and the training data vector (TDV),
    - $p(.|.)$ denotes a respective conditional probability.

5. Method according to one of Claims 1 to 3,
    in which the information content N(P) of the training data vector (TDV) or the information content N(P) of the clusters is ascertained on the basis of the following specification:

$$N(P) = \frac{1}{2} \ln\left( \det\left( 1 + F''\left( F'_{,}(P)\right)^{-i}\right)\right)$$

where

$$F'' = \vec{\nabla}\,\vec{\nabla}\left( \sum_{i=1}^{M}\left( y_i - f_i\left( \underline{x}, \underline{w}_{P_i}\right)\right)^n\right)$$

where

$$F'_{,}(P) = \sum_{q=1}^{S} \vec{\nabla}\,\vec{\nabla}\left( \sum_{i=1}^{M}\left( y_i(q) - f_i\left( \underline{x}(q), \underline{w}_{P_i}\right)\right)^n\right).$$

where

- $\underline{x}$ denotes a respective input vector of the neural network (NN),
- $\underline{w}_{P_i}$ denotes a respective weight vector of the neural network NN,
- $f_i(.)$ denotes a mapping function, produced by the neural network (NN), for a component $y_i$ of an output vector $\underline{y}$ of the neural network (NN),
- n denotes an arbitrary natural number,
- M denotes a dimension of the respective output vector $\underline{y}$ of the neural network (NN),
- i denotes a first index for uniquely identifying a component $y_i$ of the output vector $\underline{y}$ of the neural network (NN),
- $\vec{\nabla}\vec{\nabla}(.)$ denotes a Hessian matrix,
- q denotes a second index for uniquely identifying the respective training data vector (TDV) taken into account, and
- S denotes a number of training data vectors (TDV) taken into account previously.

**Revendications**

1. Procédé assisté par ordinateur pour la sélection de données d'apprentissage pour un réseau neuronal (NN),

   dans lequel on lit (201) au moins un vecteur de données d'apprentissage (TDV),
   dans lequel on détermine (202) pour le vecteur de données d'apprentissage (TDV) une teneur en information N(P) du vecteur de données d'apprentissage (TDV),
   et dans lequel la détermination de la teneur en information N(P) pour le vecteur de données d'apprentissage (TDV) s'effectue en utilisant des vecteurs de données d'apprentissage (TDV) pris en compte auparavant dans une phase d'apprentissage,

   **caractérisé par le fait que**

   - si la teneur en information N(P) du vecteur de données d'apprentissage (TDV) est supérieure (203) à une première valeur de seuil (S1) pouvant être prescrite, on utilise (204) le vecteur de données d'apprentissage (TDV) pour l'apprentissage du réseau neuronal (NN), et
   - si la teneur en information N(P) du vecteur de données d'apprentissage (TDV) n'est pas supérieure (203) à la première valeur de seuil (S1), on n'utilise pas (205) le vecteur de données d'apprentissage (TDV) pour l'apprentissage du réseau neuronal (NN).

**2.** Procédé assisté par ordinateur pour la sélection de données d'apprentissage pour un réseau neuronal (NN),

- dans lequel on lit (301) plusieurs vecteurs de données d'apprentissage (TDV),
- dans lequel on regroupe (302) les vecteurs de données d'apprentissage (TDV) en plusieurs clusters,
- dans lequel on détermine (303) pour au moins une partie des clusters une teneur en information N(P) du cluster,
- dans lequel la détermination de la teneur en information N(P) du cluster respectif s'effectue en utilisant des vecteurs de données d'apprentissage (TDV) pris en compte auparavant dans une phase d'apprentissage,
- dans lequel, si la teneur en information N(P) du cluster respectif est supérieure (304) à une deuxième valeur de seuil (S2) pouvant être prescrite, on utilise (305) au moins un vecteur de données d'apprentissage (TDV) du cluster respectif pour l'apprentissage du réseau neuronal (NN), et
- dans lequel, si la teneur en information N(P) du cluster respectif n'est pas supérieure (304) à la deuxième valeur de seuil (S2), on n'utilise (306) aucun vecteur de données d'apprentissage (TDV) du cluster respectif pour l'apprentissage du réseau neuronal (NN).

**3.** Procédé selon la revendication 2,

- dans lequel on détermine pour le cluster respectif un vecteur central de cluster, et
- dans lequel on détermine la teneur en information N(P) pour le vecteur central de cluster.

**4.** Procédé selon l'une des revendications 1 à 3,
dans lequel on détermine la teneur en information N(P) du vecteur de données d'apprentissage (TDV) ou la teneur en information N(P) des clusters selon la règle suivante :

$$N(P) \;=\; \int p\!\left(\underline{w}\Big|\underline{D}^{(P+1)}\right) \ln\!\left(\frac{p\!\left(\underline{w}\Big|\underline{D}^{(P+1)}\right)}{p\!\left(\underline{w}\Big|\underline{D}^{(P)}\right)}\right) d\underline{w}\,,$$

avec

- $\underline{w}$ un vecteur de poids du réseau neuronal (NN) qui a comme composantes des poids $\underline{w}_i$ du réseau neuronal (NN),
- $\underline{D}^{(P)}$ un ensemble de données d'apprentissage qui contient les vecteurs de données d'apprentissage (TDV) déjà pris en compte auparavant,
- $\underline{D}^{(P+1)}$ un ensemble de données d'apprentissage complété qui contient les vecteurs de données d'apprentissage (TDV) pris en compte auparavant et le vecteur de données d'apprentissage (TDV),
- $p(.|.)$ une probabilité conditionnée.

**5.** Procédé selon l'une des revendications 1 à 3, dans lequel on détermine la teneur en information N(P) du vecteur de données d'apprentissage (TDV) ou la teneur en information N(P) des clusters selon la règle suivante :

$$N(P) \;=\; \frac{1}{2}\ln\!\left(\det\left(1 \,+\, F''\left(F'^{(P)}\right)^{-1}\right)\right)$$

avec

$$F'' \;=\; \vec{\nabla}\,\vec{\nabla}\left(\sum_{i=1}^{M}\left(y_i \,-\, f_i\!\left(\underline{x},\underline{w}_{Pi}\right)\right)^n\right)$$

$$F''(P) = \sum_{q=1}^{S} \vec{\nabla} \vec{\nabla} \left( \sum_{i=1}^{M} \left( y_i^{(q)} - f_i \left( \underline{x}^{(q)}, \underline{w}_{P_i} \right) \right)^n \right),$$

avec

- $\underline{x}$ un vecteur d'entrée du réseau neuronal (NN),
- $\underline{w}_{P_i}$ un vecteur de poids du réseau neuronal (NN),
- $f_i(.)$ une fonction de reproduction réalisée par le réseau neuronal (NN) pour une composante $y_i$ d'un vecteur de sortie $\underline{y}$ du réseau neuronal (NN),
- $n$ un nombre naturel quelconque,
- $M$ une dimension du vecteur de sortie respectif $\underline{y}$ du réseau neuronal (NN),
- $i$ un premier indice pour l'identification univoque d'une composante $y_i$ du vecteur de sortie $\underline{y}$ du réseau neuronal (NN),
- $\vec{\nabla}\vec{\nabla}(.)$ une matrice de Hesse,
- $q$ un deuxième indice pour l'identification univoque du vecteur de données d'apprentissage (TDV) respectif pris en compte, et
- $S$ un nombre de vecteurs de données d'apprentissage (TDV) pris en compte auparavant.

## FIG 1A

## FIG 1B

## FIG 1C

## FIG 2

Einlesen mindestens eines Trainingsdatenvektors ⌐201

Ermittlung des Informationsgehalts des Trainingsdatenvektors ⌐202

Informationsgehalt > erster Schwellenwert ? 203

Ja → Verwendung des Trainingsdatenvektors bei dem Training des neuronalen Netzes 204

Nein → Keine Verwendung des Trainingsdatenvektors bei dem Training des neuronalen Netzes ⌐205

## FIG 3

| | |
|---|---|
| Einlesen mehrerer Trainingsdatenvektoren | 301 |

↓

| | |
|---|---|
| Gruppieren der Trainingsdatenvektoren in Cluster | 302 |

↓

| | |
|---|---|
| Ermittlung des Informationsgehalts des Clusters | 303 |

↓

**304**

Informationsgehalt > zweiter Schwellenwert ?

— Ja → 

**305**

Verwendung mindestens eines Teils der Trainingsdatenvek-toren des Clusters bei dem Training des neuronalen Netzes

↓ Nein

Keine Verwendung der Trainingsdatenvektoren des Clusters bei dem Training des neuronalen Netzes — 306

## FIG 4

## FIG 5